# EUROPÄISCHE PATENTSCHRIFT

(11) **EP 0 983 783 B1**
(45) Veröffentlichungstag und Bekanntmachung des Hinweises auf die Patenterteilung: **30.03.2005**
(21) Anmeldenummer: 99117089.5
(22) Anmeldetag: 31.08.1999
(51) Int. Cl.: B01D 46/24, B01D 46/42

(54) **Vorrichtung zum Reinigen staubhaltiger Gase**
Apparatus for cleaning dust laden gases
Installation pour la purification de gaz chargés de poussières

(30) Priorität: 03.09.1998 DE 29815867 U
(43) Veröffentlichungstag der Anmeldung: 08.03.2000
(73) Patentinhaber: Alt, Hans, 74336 Brackenheim (DE)
(72) Erfinder: Alt, Hans, 74336 Brackenheim (DE)
(74) Vertreter: Clemens, Gerhard, Dr.-Ing.

(56) Entgegenhaltungen:
- EP-A- 0 148 359
- DE-A- 19 644 643

## Beschreibung

### TECHNISCHES GEBIET

Die vorliegende Erfindung betrifft eine Vorrichtung zum Reinigen staubhaltiger Gase mit einem Gehäuse, zumindest einem, insbesondere mehreren, innerhalb des Gehäuses angeordneten Filterelement/en, einem innerhalb des Gehäuses vorhandenen von einem ersten Gehäusemantel umgebenen Rohgasbereich, einem innerhalb des Gehäuses vorhandenen von einem zweiten Gehäusemantel umgebenen Reingasbereich, einer den Rohgasbereich und den Reingasbereich trennenden Platte mit zumindest einer Öffnung, an der das zumindest eine Filterelement dichtend anschließbar ist, und Mitteln zum Erzeugen einer Strömungsrichtung innerhalb des Gehäuses derart, dass das staubhaltige Rohgas über eine Einlassöffnung in den Rohgasbereich gelangt, das/die Filterelement/e durchdringt/durchdringen, dabei gereinigt wird, in den Reingasbereich gelangt und anschließend über eine Auslassöffnung abgeführt wird.

Derartige Vorrichtungen, die auch Filteranordnungen genannt werden, werden in vielen Branchen und Anwendungen zu Entstaubungszwecken eingesetzt. So zum Beispiel bei der Befüllung von Silos mit staubförmigen Schüttgütern, bei der Herstellung von Beton oder Mörtel mit stationären Mischanlagen oder sonstigen Produktionsabläufen, die eine Erfassung der staubhaltigen Luft und Abscheidung der Staubpartikel erforderlich machen.

### STAND DER TECHNIK

Aus der EP 0 148 359 ist eine Filteranordung der eingangs genannten Art bekannt. Bei dieser Anordnung kann der erste Gehäusemantel des Reingasbereiches weggeschwenkt werden und die Filterelemente können von oben in die Öffnungen der Platte eingesetzt werden. Das Wegschwenken des oberen Gehäusemantels als auch das Wechseln der Filterelemente nach oben benötigt jedoch Platz, der mitunter in baulich engen Gegebenheiten, zum Beispiel in Fertigungshallen, nicht zur Verfügung steht.

Weiterhin sind Filteranordnungen bekannt, bei der die Filterelemente von der Rohgasseite, das heißt von der Unterseite der Platte her eingesetzt beziehungsweise ausgetauscht werden können. Derartige Filteranordnungen besitzen einen metallischen Gehäusemantel, der zu Wartungszwecken eine Tür aufweist. Bei dem Einsatz derartiger Filteranordnungen zum Zwecke der Entstaubung von Mischgeräten bei der Herstellung von Beton kommt es häufig infolge des beim Mischen entstehenden feuchten Staubes zu Anbackungen an der Gehäuseinnenwandung. Weiterhin gestalten sich die Wartungsarbeiten relativ aufwendig, da der Filterrohgasraum lediglich von einer Seite über eine Türe zugänglich ist. Gerade bei der feuchtigkeitsbeladenen Staubluft beim Mischvorgang ist ein Wartungs-/kontrollintervall in wesentlich kürzeren Zeitabständen empfehlenswert.

### DARSTELLUNG DER ERFINDUNG

Ausgehend von dem genannten Stand der Technik liegt der vorliegenden Erfindung die Aufgabe beziehungsweise das technische Problem zugrunde eine Vorrichtung zum Reinigen staubhaltiger Gase anzugeben, die eine dauerhaft zuverlässige Funktion gewährleistet, die auch unter beengten Bedingungen noch eine wirtschaftliche Montage ermöglicht, die eine schnelle Durchführung der Wartungsarbeiten und eine optische Rundum-Kontrolle problemlos gewährleistet.

Die erfindungsgemäße Vorrichtung zum Reinigen staubhaltiger Gase ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Vorrichtung zum Reinigen staubhaltiger Gase der Eingangs genannten Art zeichnet sich demgemäß dadurch aus, dass auf Höhe des ersten und/oder zweiten Gehäusemantels als Tragkonstruktion Stabprofilelemente vorhanden sind und der erste und/oder zweite Gehäusemantel als in Längsrichtung teleskopierbarer beziehungsweise faltbarer Mantel ausgebildet ist.

Das Teleskopieren beziehungsweise Falten kann hierbei manuell oder mittels Aggregaten automatisch auf Anforderung durchgeführt werden.

Dadurch, dass der Mantel als teleskopierbarer Mantel ausgebildet ist kann zu Wartungs- und Kontrollzwecken dieser Mantel in einfacher Art und Weise in vertikaler Längsrichtung zusammengefahren werden, so dass die Filterelemente rundum frei zugänglich sind.

Eine besonders bevorzugte Ausgestaltung die eine wirtschaftliche Herstellung gewährleistet, zeichnet sich dadurch aus, dass der teleskopierbare Mantel als ziehharmonikaartig oder spiralartig faltbare Schlaucheinheit ausgebildet ist.

Eine konstruktiv besonders einfache Ausgestaltung zeichnet sich dadurch aus, dass der teleskopierbare Mantel nur im Bereich des zweiten Gehäusemantels vorhanden ist. Um die Zugänglichkeit zu erleichtern zeichnet sich eine besonders vorteilhafte Ausgestaltung dadurch aus, dass der zweite Gehäusemantel lösbar an der Platte befestigt ist, wobei die dichtende Befestigung zwischen Platte und Gehäusemantel in Art eines Bajonettverschlusses vorteilhaft ausgebildet sein kann.

Um die Stabilität bei gleichzeitiger Aufrechterhaltung der Flexibilität zu gewährleisten zeichnet sich eine bevorzugte Weiterbildung dadurch aus, dass die Schlaucheinheit spiralförmig verlaufende Verstärkungselemente, insbesondere einen spiralförmigen Verstärkungsdraht aufweist.

Im Sinne einer wirtschaftlichen Fertigung ist es besonders vorteilhaft den teleskopierbaren Mantel aus Kunststoff, insbesondere durchsichtigem Kunststoff auszubilden, wobei als Kunststoffmaterial bevorzugt Polyurethan (PU) zum Einsatz kommt. Infolge der Ausbildung eines durchsichtigen Kunststoffmantels ist in einfacher Art und Weise eine optische Kontrolle hinsichtlich möglicher Anbackungen innerhalb der Filteranordnung durchzuführen. Des weiteren weist ein derartiger Mantel aus Kunststoff einen erhöhten Wärmedurchgangswiderstand auf.

Eine weitere bevorzugte Ausgestaltung der erfindungsgemäßen Vorrichtung zeichnet sich dadurch aus, dass der Mantel aus einem flexiblen Gewebe, beispielsweise Planenstoffgewebe, Kunststoffgewebe oder ähnlich strapazierfähigem Material ausgebildet ist.

Infolge der Flexibilität des Mantels werden Anbackungen dauerhaft zuverlässig vermieden. Im Betrieb, insbesondere aber beim Abreinigen der Filterelemente beispielsweise, infolge pneumatischer Druckstöße, kommt es zu einer Eigendynamik der gesamten Filteranordnung, das heißt auch die Wandung des Mantels fängt an zu schwingen, wodurch sich eventuell gebildete Anbackungen lösen. Im Übrigen kann das Lösen von Anbackungen durch einfache Verformung der Wandung des flexiblen Außenmantels bewerkstelligt werden.

Zur Stabilisierung des flexiblen Mantels ist es besonders vorteilhaft, am oberen Endbereich einen Anschlussflanschring vorzusehen, über den der Mantel an die Platte angeschlossen wird. Ebenso kann es in einer besonders vorteilhaften Ausgestaltung so sein, dass auch im unteren Endbereich des Mantels ein Anschlussflanschring zum Anschluss an eine im unteren Bereich der Vorrichtung vorhandene trichterförmige oder zylindrische Anschlusseinheit vorhanden ist.

Hinsichtlich einer einfachen Montage der Vorrichtung zum Reinigen staubhaltiger Gase hat es sich als vorteilhaft erwiesen, die Vorrichtung als Vorrichtung mit drei Montageeinheiten auszubilden, nämlich in der Art, dass die Reingaskammer (Reingasbereich) mit Platte, Deckel und mit starrem ersten Gehäusemantel als eine Montageeinheit ausgebildet ist, dass die Rohgaskammer (Rohgasbereich) mit den Stabprofileinheiten und dem teleskopierbaren zweiten Gehäusemantel zu einer Montageeinheit ausgebildet ist und unterseitig die anzuschließende Anschlusseinheit ebenfalls als einteiliges Montagebauteil ausgebildet ist.

Besonders vorteilhaft ist der Gehäusemantel insgesamt als zylindrischer Mantel ausgebildet.

Es kann in vorteilhafter Art und Weise eine Tragkonstruktion aus Stabprofilen vorhanden sein, wobei die Stabprofile als Hohlprofil, insbesondere Viereck- oder Rundhohlprofile ausgebildet sind, die umfangsmäßig in einem vorgegebenen Raster, bevorzugt 90°, um den Mantel herum außenseitig angeordnet sind. Die Stabprofile können bei einer derartigen Konstruktion Führungs- und Trageigenschaften im Falle des Faltens beziehungsweise Schiebens des flexiblen Gehäusemantels übernehmen.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Ansicht einer Vorrichtung zum Reinigen staubhaltiger Gase mit einer Reingaskammer die von einem ersten starren Gehäusemantel umgeben ist und einer Rohgaskammer, die von einem flexiblen zweiten Gehäusemantel umgeben ist,
- Fig. 2 und 3: schematische Perspektivdarstellung der Vorrichtung gemäß Fig. 1 beim Zusammenschieben des zweiten flexiblen Gehäusemantels und
- Fig. 4: schematische Ansicht einer Vorrichtung zum Reinigen staubhaltiger Gase bei der auch der erste Gehäusemantel der Reingaskammer flexibel ausgebildet ist.

### WEGE ZUM AUSFÜHREN DER ERFINDUNG

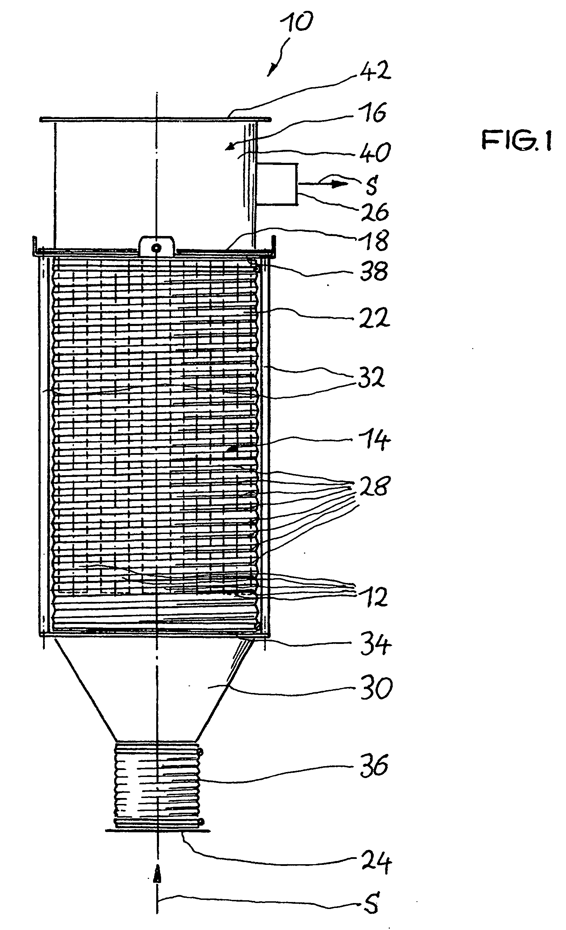

In Fig. 1 ist eine Vorrichtung 10 zum Reinigen staubhaltiger Gase dargestellt, die unterseitig eine Einlassöffnung 24 besitzt, an die ein flexibler Spiralschlauch 36 angeschlossen ist. Die Einlassöffnung 24 steht mit einem in Fig. 1 nicht dargestellten Behältnis in Strömungsverbindung, wobei in dem Behältnis staubhaltige Luft vorhanden ist. Ein derartiges Behältnis kann beispielsweise ein Mischerbehältnis zum herstellen von Fertigbeton oder ein Silo sein.

An den Spiralschlauch 36 schließt oberseitig eine trichterförmige sich nach oben aufweitende Anschlusseinheit 30 an, die oberseitig am Rand umlaufend einen Auflagerflanschring 34 besitzt. Oberseitig über der Anschlusseinheit 30 ist die eigentliche Rohgaskammer 14 angeordnet, die von einem zylindrischen zweiten Gehäusemantel 22 umgeben ist. An die Rohgaskammer 14 schließt sich oberseitig eine Reingaskammer 16 an, die einen zylindrischen ersten Gehäusemantel 40, beispielsweise aus Metall, aufweist. Oberseitig ist die Reingaskammer 16 mit einem Deckel 42 abgeschlossen. Die Trennung von Reingaskammer 16 und Rohgaskammer 14 erfolgt über eine unterseitig an der Reingaskammer 16 vorhandenen Platte 18, die Ausnehmungen aufweist, an die von unten her Filterelemente 12 dichtend angeschlossen werden können, die sich im wesentlichen über die Höhe der Rohgaskammer 14 erstrecken.

Die Reingaskammer 16 besitzt eine in Fig. 1 schematisch dargestellte nach rechts verlaufende Auslassöffnung 26, durch die die gereinigte Luft abgeführt wird. Desweiteren sind an der Vorrichtung 10 nicht dargestellte Mittel zum Erzeugen einer Strömung innerhalb der Vorrichtung 10 gemäß den dargestellten Pfeilen S vorhanden, derart, dass über die Einlassöffnung 24 die staubhaltige Luft angesaugt wird, durch das Innere der Filterelemente 12 gesaugt wird, von dort über die Öffnungen der Platte 18 in die Reingaskammer 16 gelangt und schließlich über die Auslassöffnung 26 nach außen geführt wird.

Die eigentliche Tragkonstruktion der Rohgaskammer 14 bilden vier umfangsmäßig in einem Winkel von 90° verteilt angeordnete Stabprofilelemente 32, die unterseitig an den Auflagerflanschring 34 und oberseitig an die Platte 18 angeschlossen sind.

Der zweite Gehäusemantel 22 ist als in seiner Längsrichtung teleskopierbarer beziehungsweise zusammenfaltbarer flexibler Mantel aus durchsichtigem Kunststoff ausgebildet. In seinem oberen Endbereich besitzt er einen Anschlussflanschring 38, der unterseitig an der Platte 18 lösbar befestigbar ist. Im unteren Endbereich ist der zweite Gehäusemantel 22 dichtend mit dem Auflagerflanschring 34 verbunden.

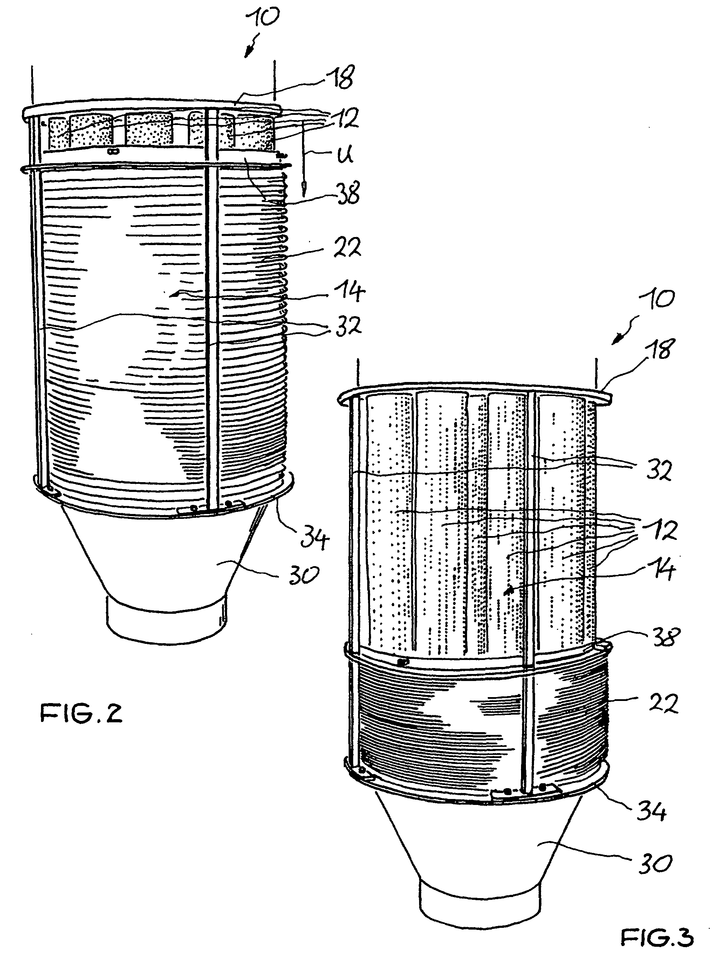

Zu Inspektions- und Wartungszwecken wird der Anschlussflanschring 38 von der Platte 18 gelöst und gemäß den Fig. 2 und 3 nach unten (Pfeil U) zusammengefaltet. Dadurch sind die Filterelemente 12 rundherum frei zugänglich und können in einfacher Art und Weise ausgetauscht werden.

Zu Verstärkungszwecken besitzt der flexible zweite Gehäusemantel 22 spiralförmig eingelassene Verstärkungselemente 28, die beispielsweise als Stahldraht ausgebildet sein können.

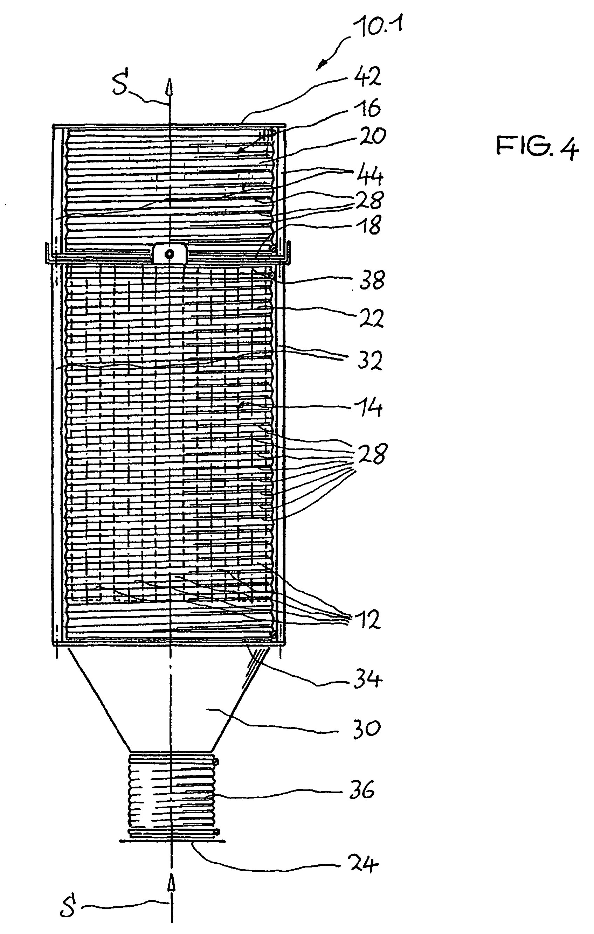

Die Ausführungsvariante einer Vorrichtung 10.1 gemäß Fig. 4 unterscheidet sich von der oben beschriebenen Ausführungsform dadurch, dass auch der erste Gehäusemantel 20 als flexibler, in Längsrichtung teleskopierbarer beziehungsweise faltbarer Mantel ausgebildet ist. Auch auf Höhe der Reingaskammer sind hier ebenfalls Stabprofilelemente 44 als Tragkonstruktion vorhanden, die oberseitig an den Deckel 42 und unterseitig an die Platte 18 angeschlossen sind.

Eine einfache und wirtschaftliche Montage der Vorrichtung 10 Vorort ist dadurch möglich, dass die Reingaskammer 16 mit Ihrem Gehäusemantel 20 beziehungsweise 40 und ihrem Deckel 42 und der Platte 18 eine erste Montageeinheit bilden. Ebenso bildet die Rohgaskammer 14 mit ihrem flexiblen Gehäusemantel 22 und ihren Stabprofilelementen 32 eine weitere Montageeinheit. Die dritte Montageeinheit bildet die trichterförmige Anschlusseinheit 30. Damit lassen sich handliche Montageeinheiten umsetzen, die auch bei beengten Platzverhältnissen problemlos montiert werden können.

Wie bereits erwähnt ermöglicht die dargestellte Vorrichtung 10, 10.1 eine problemlose und einfache Montage, ebenso eine einfache Wartung beziehungsweise Austausch der Filterelemente und gewährleistet durch den Einsatz eines durchsichtigen Kunststoffmantels für den zweiten Gehäusemantel 22 eine optische Kontrolle hinsichtlich des Verschmutzungsgrades innerhalb der Rohgaskammer 14. Die eventuell im Laufe der Zeit auftretende Anbackungen an der Innenwand des zweiten Gehäusemantels 22 können durch einfaches Klopfen gegen die Wandung aufgrund der Flexibilität der Wandung problemlos gelöst werden. Im übrigen können an der Vorrichtung noch Rüttelaggregate oder pneumatisch betätigbare Druckluftaggregate zum Reinigen der Filterelemente vorhanden sein, welche Aggregate in den Fig. nicht dargestellt sind.

## Patentansprüche

1. Vorrichtung (10) zum Reinigen staubhaltiger Gase mit
- einem Gehäuse,
- zumindest einem, insbesondere mehreren innerhalb des Gehäuses angeordneten Filterelement/en (12),
- einem innerhalb des Gehäuses vorhandenen von einem zweiten Gehäusemantel (12) umgebenen Rohgasbereich (14),
- einem innerhalb des Gehäuses vorhandenen von einem ersten Gehäusemantel (20; 40) umgebenen Reingasbereich (16),
- einer den Rohgasbereich (14) und den Reingasbereich (16) trennenden Platte (18), mit zumindest einer Öffnung, an der das zumindest eine Filterelement (12) dichtend angeschlossen ist, und
- Mitteln zum Erzeugen einer Strömungseinrichtung (S) innerhalb des Gehäuses derart, dass das staubhaltige Rohgas über eine Einlassöffnung (24) in den Rohgasbereich (14) gelangt, das/die Filterelement/e (12) durchdringt, dabei gereinigt wird, in den Reingasbereich (16) gelangt und anschließend über eine Auslassöffnung (26) abgeführt wird,
**dadurch gekennzeichnet, dass**
auf Höhe des ersten und/oder zweiten Gehäusemantels (20;22) als Tragkonstruktion Stabprofilelemente (32) vorhanden sind und
- der erste und/oder zweiter Gehäusemantel (20;22) in Längsrichtung als teleskopierbarer/faltbarer Mantel (20;22) ausgebildet ist.

2. Vorrichtung nach Anspruch 1,
**dadurch gekennzeichnet, dass**
der teleskopierbare/faltbare Mantel (20;22) als ziehharmonikaartig oder spiralartig faltbare elastische Schlaucheinheit ausgebildet ist.

3. Vorrichtung nach Anspruch 1 und/oder 2,
**dadurch gekennzeichnet, dass**
der teleskopierbare Mantel nur im Bereich des zweiten Gehäusemantels (22) vorhanden ist.

4. Vorrichtung nach Anspruch 3,
**dadurch gekennzeichnet, dass**
der zweite Gehäusemantel (22) lösbar an der Platte (18) befestigt ist.

5. Vorrichtung nach Anspruch 2,
**dadurch gekennzeichnet, dass**
die Schlaucheinheit spiralförmig verlaufende Verstärkungselemente (28) aufweist.

6. Vorrichtung nach einem oder mehreren der vorstehenden Ansprüche,
**dadurch gekennzeichnet, dass**
der teleskopierbare Mantel aus Kunststoff, insbesondere durchsichtigem Kunststoff, besteht.

7. Vorrichtung nach einem oder mehreren der vorstehenden Ansprüche 1 bis 5,
**dadurch gekennzeichnet, dass**
der Mantel aus flexiblem Gewebematerial, insbesondere Planenstoffgewebe, Kunststoffgewebe oder dergleichen strapazierfähigem Material, ausgebildet ist.

8. Vorrichtung nach Anspruch 6,
**dadurch gekennzeichnet, dass**
als Kunststoffmaterial Polyurethan (PU) eingesetzt wird.

9. Vorrichtung nach einem oder mehreren der vorstehenden Ansprüche,
**dadurch gekennzeichnet, dass**
der teleskopierbare Mantel am oberen Endbereich einen Anschlussflanschring (38) aufweist.

10. Vorrichtung nach Anspruch 9,
**dadurch gekennzeichnet, dass**
der Anschlussflanschring (38) über einen Bajonettverschluss dichtend mit der Platte (18) verbunden ist.

11. Vorrichtung nach einem oder mehreren der vorstehenden Ansprüche,
**dadurch gekennzeichnet, dass**
der Reingasbereich (16) mit starrem ersten Gehäusemantel (40), Platte (18) und Deckel (42) als eine Montageeinheit ausgebildet ist,
- der Rohgasbereich (14) mit seinem teleskopierbaren Gehäusemantel (22) und den Stabprofilelementen (32) als eine Montageeinheit ausgebildet ist und
- eine unterseitige trichterförmige Anschlusseinheit (30) mit Auflagerflansch (34) zum Anschließen der Stabprofilelemente (32) und des zweiten Gehäusemantels (22) als ein Montagebauteil ausgebildet ist.

12. Vorrichtung nach einem oder mehreren der vorstehenden Ansprüche,
**dadurch gekennzeichnet, dass**
die Filterelemente (12) als von unten an die Platte (18) dichtend anschließbare Filtereinsätze ausgebildet sind.

13. Vorrichtung nach einem oder mehreren der vorstehenden Ansprüche,
**dadurch gekennzeichnet, dass**
der Gehäusemantel (20;22) als zylindrischer Mantel ausgebildet ist.

14. Vorrichtung nach einem oder mehreren der vorstehenden Ansprüche,
**dadurch gekennzeichnet, dass**
die Stabprofilelemente (32) als Hohlprofilelemente, insbesondere Viereck- oder Rundrohrelemente ausgebildet sind.

15. Vorrichtung nach einem oder mehreren der vorstehenden Ansprüche,
**dadurch gekennzeichnet, dass**
die Stabprofilelemente (32) außerhalb des Gehäusemantels (20;22) verlaufen.

16. Vorrichtung nach einem oder mehreren der vorstehenden Ansprüche,
**dadurch gekennzeichnet, dass**
der Mantel manuell oder mittels Aggregaten automatisch teleskopierbar beziehungsweise faltbar ausgebildet ist.

## Claims

1. Device (10) for the purification of dust-containing gases, with
- a housing,
- at least one filter element (12), in particular a plurality of filter elements (12), arranged within the housing,
- an untreated-gas region (14) present within the housing and surrounded by a second housing casing (12),
- a pure-gas region (16) present within the housing and surrounded by a first housing casing (20; 40),
- a plate (18) separating the untreated-gas region (14) and the pure-gas region (16) and having at least one orifice, to which the at least one filter element (12) is connected sealingly, and
- means for generating a flow device (S) within the housing, in such a way that the dust-containing untreated gas enters the untreated-gas region (14) via an inlet orifice (24), passes through the filter element or filter elements (12), is at the same time purified, enters the pure-gas region (16) and is subsequently discharged via an outlet orifice (26),
**characterized in that**, level with the first and/or the second housing casing (20; 22), bar-profile elements (32) are present as a carrying structure, and
- the first and/or the second housing casing (20; 22) is designed as a longitudinally telescopic/foldable casing (20; 22).

2. Device according to Claim 1, **characterized in that** the telescopic/foldable casing (20; 22) is designed as an elastic hose unit foldable in a concertina-like or spiral-like manner.

3. Device according to Claim 1 and/or 2, **characterized in that** the telescopic casing is present only in the region of the second housing casing (22).

4. Device according to Claim 3, **characterized in that** the second housing casing (22) is fastened releasably to the plate (18).

5. Device according to Claim 2, **characterized in that** the hose unit has spirally running reinforcing elements (28).

6. Device according to one or more of the preceding claims, **characterized in that** the telescopic casing consists of plastic, in particular transparent plastic.

7. Device according to one or more of the preceding Claims 1 to 5, **characterized in that** the casing is produced from flexible fabric material, in particular awning-cloth material, synthetic fabric or such like hard-wearing material.

8. Device according to Claim 6, **characterized in that** the plastic material used is polyurethane (PU).

9. Device according to one or more of the preceding claims, **characterized in that** the telescopic casing has a flanged connecting ring (38) on the upper end region.

10. Device according to Claim 9, **characterized in that** the flanged connecting ring (38) is connected sealingly to the plate (18) via a bayonet fastening.

11. Device according to one or more of the preceding claims, **characterized in that** the pure-gas region (16) with rigid first housing casing (40), plate (18) and cover (42) is designed as one assembly unit,
- the untreated-gas region (14) with its telescopic housing casing (22) and with the bar-profile elements (32) is designed as one assembly unit, and
- an underside funnel-shaped connection unit (30) with bearing flange (34) for the connection of the bar-profile elements (32) and of the second housing casing (22) is designed as one assembly component.

12. Device according to one or more of the preceding claims, **characterized in that** the filter elements (12) are designed as filter inserts capable of being connected sealingly to the plate (18) from below.

13. Device according to one or more of the preceding claims, **characterized in that** the housing casing (20; 22) is designed as a cylindrical casing.

14. Device according to one or more of the preceding claims, **characterized in that** the bar-profile elements (32) are designed as hollow-profile elements, in particular square or round tubular elements.

15. Device according to one or more of the preceding claims, **characterized in that** the bar-profile elements (32) run outside the housing casing (20; 22).

16. Device according to one or more of the preceding claims, **characterized in that** the casing is designed to be telescopic or foldable manually or, by means of assemblies, automatically.

## Revendications

1. Dispositif (10) pour l'épuration de gaz chargés de poussière avec
- un boîtier,
- au moins un, en particulier plusieurs éléments filtrants (12) disposés à l'intérieur du boîtier,
- une zone des gaz bruts (14) se trouvant à l'intérieur du boîtier, entourée d'une deuxième enveloppe de boîtier (22),
- une zone des gaz épurés (16) se trouvant à l'intérieur du boîtier, entourée par une première enveloppe de boîtier (20 ; 40),
- une plaque (18) séparant la zone des gaz bruts (14) et la zone des gaz épurés (16) avec au moins une ouverture à laquelle est raccordé au moins un élément filtrant (12) avec effet d'étanchéité et
- des moyens de génération d'une direction d'écoulement (S) à l'intérieur du boîtier, de telle sorte que le gaz brut chargé de poussière accède par un orifice d'entrée (24) dans la zone des gaz bruts (14), traverse le / les élément(s) filtrant(s) 12, lors de quoi il est épuré, accède dans la zone des gaz épurés (16) et est ensuite évacué par l'intermédiaire d'un orifice de sortie 26,
**caractérisé en ce qu'**il y a des éléments en barreaux profilés (32) à la hauteur de la première et / ou de la deuxième enveloppe de boîtier (20 ; 22) comme structure porteuse et
- **en ce que** la première et / ou la deuxième enveloppe de boîtier (20 ; 22) sont configurées dans le sens de la longueur comme enveloppes télescopiques / repliables (20 ; 22).

2. Dispositif selon la revendication 1,
**caractérisé en ce que** l'enveloppe télescopique / repliable (20 ; 22) est configurée en accordéon ou comme tuyau flexible élastique repliable en spirale.

3. Dispositif selon la revendication 1 et / ou 2,
**caractérisé en ce que** l'enveloppe télescopique n'existe que dans la zone de la deuxième enveloppe de boîtier (22).

4. Dispositif selon la revendication 3,
**caractérisé en ce que** la deuxième enveloppe de boîtier (22) est fixée de manière démontable sur la plaque (18).

5. Dispositif selon la revendication 2,
**caractérisé en ce que** l'unité de tuyau flexible comporte des éléments de renforcement (28) s'étendant en spirale.

6. Dispositif selon l'une ou plusieurs des revendications précédentes,
**caractérisé en ce que** l'enveloppe télescopique est constituée de plastique, en particulier de plastique transparent.

7. Dispositif selon l'une ou plusieurs des revendications précédentes 1 à 5,
**caractérisé en ce que** l'enveloppe est configurée en un matériau textile flexible, en particulier en toile à bâche, en tissu de plastique ou en un matériau tenace similaire.

8. Dispositif selon la revendication 6,
**caractérisé en ce que** le plastique utilisé est du polyuréthanne (PU).

9. Dispositif selon l'une ou plusieurs des revendications précédentes,
**caractérisé en ce que** l'enveloppe télescopique comporte un anneau-bride de raccordement (38) dans la zone d'extrémité supérieure.

10. Dispositif selon la revendication 9,
**caractérisé en ce que** l'anneau-bride de raccordement (38) est relié à la plaque (18) avec fonction d'étanchéité par l'intermédiaire d'une fermeture à baïonnette.

11. Dispositif selon l'une ou plusieurs des revendications précédentes,
**caractérisé en ce que** la zone des gaz épurés (16) est configurée comme une unité de montage avec la première enveloppe rigide de boîtier (40), la plaque (18) et le couvercle (42),
- **en ce que** la zone des gaz bruts (14) est configurée comme une unité de montage avec son enveloppe télescopique de boîtier (22) et les éléments en barreaux profilés (32) et
- **en ce qu'**une unité de raccordement (30) en forme d'entonnoir à la partie inférieure, avec un anneau-bride d'appui (34) pour le raccordement des éléments en barreaux profilés (32) de la deuxième enveloppe de boîtier (22), est configurée comme une unité de montage.

12. Dispositif selon l'une ou plusieurs des revendications précédentes,
**caractérisé en ce que** les éléments filtrants (12) sont configurés comme des cartouches de filtre pouvant être raccordées depuis le bas avec effet d'étanchéité à la plaque (18).

13. Dispositif selon l'une ou plusieurs des revendications précédentes,
**caractérisé en ce que** l'enveloppe de boîtier (20 ; 22) est configurée comme enveloppe cylindrique.

14. Dispositif selon l'une ou plusieurs des revendications précédentes,
**caractérisé en ce que** les éléments en barreaux profilés (32) sont configurés comme éléments en profilé creux, en particulier comme éléments tubulaires rectangulaires ou ronds.

15. Dispositif selon l'une ou plusieurs des revendications précédentes,
**caractérisé en ce que** les éléments en barreaux profilés (32) sont disposés en dehors de l'enveloppe de boîtier (20 ; 22)

16. Dispositif selon l'une ou plusieurs des revendications précédentes,
**caractérisé en ce que** l'enveloppe est configurée emboîtable télescopiquement, respectivement pliable, manuellement ou automatiquement au moyen d'appareillages.
